# FASCICULE DE BREVET EUROPEEN

(11) **EP 1 214 773 B1**
(45) Date de publication et mention de la délivrance du brevet: **29.10.2003**
(21) Numéro de dépôt: 00960767.2
(22) Date de dépôt: 31.08.2000
(51) Int. Cl.: H02K 5/12, H02K 9/197, H02K 7/14, H02K 11/00, H02K 17/02, F04D 13/06

(54) **MOTEUR ELECTRIQUE A COURANT ALTERNATIF**
WECHSELSTROMMOTOR
ALTERNATING CURRENT ELECTRIC MOTOR

(30) Priorité: 03.09.1999 FR 9911076
(43) Date de publication de la demande: 19.06.2002
(73) Titulaire: Elf Exploration Production, 92400 Courbevoie (FR)
(72) Inventeur: PROUVOST, Hubert, F-64000 Pau (FR)
(74) Mandataire: Cabinet Hirsch
(86) Numéro de dépôt international: FR0002410
(87) Numéro de publication internationale: WO01018942

(56) Documents cités:
- EP-A- 0 604 762
- FR-A- 916 681
- FR-A- 973 151
- US-A- 4 030 058
- US-A- 4 684 840

## Description

La présente invention concerne un moteur à courant alternatif destiné à entraîner une pompe ou un compresseur.

Il est particulièrement adapté pour la réalisation de groupes de pompage immergés dans un liquide.

Il trouve son application notamment dans l'industrie pétrolière pour le pompage des fluides en fond des puits de production d'hydrocarbures sous forme liquide, gazeuse ou polyphasique.

### ETAT DE LA TECHNIQUE ANTERIEURE

Les moteurs électriques les plus couramment utilisés sont les moteurs à courant alternatif asynchrone monophasés ou polyphasés. Leur structure est décrite dans les TECHNIQUES DE L'INGENIEUR, traité de génie électrique Volume D 3 II Chapitre D 3 490 Moteurs asynchrones - Choix et problèmes connexes.

Selon ce document les moteurs à courant alternatif asynchrones comportent essentiellement un stator et un rotor.

Le stator est constitué d'enroulements bobinés de fils conducteurs répartis à l'intérieur d'une carcasse cylindrique faisant office de bâti et logés à l'intérieur d'un circuit magnétique supporté par cette carcasse. Ce circuit magnétique est formé par empilage de tôles en forme de couronnes circulaires dans lesquelles sont découpées des encoches parallèles à l'axe de la carcasse dans lesquelles sont logés les fils conducteurs des enroulements bobinés.

A l'intérieur du circuit magnétique en forme de couronne formé par l'empilage des tôles est placé le rotor de forme cylindrique qui comporte un arbre de rotation supporté par un palier support solidaire de la carcasse du stator.

Le type de rotor le plus répandu est le rotor à cage dont le circuit est constitué de barres conductrices régulièrement réparties entre deux couronnes métalliques formant les extrémités.

Cette cage est insérée à l'intérieur d'un circuit magnétique constitué de disques empilés sur l'arbre de rotation.

Avec ce type de moteur les distances entre les enroulements du stator étant très faibles ils ne peuvent pas être alimentés par des tensions très élevées et la mise en place d'isolants est délicate.

Le même problème se pose pour l'isolement des enroulements par rapport aux tôles du circuit statorique.

Pour certaines applications, par exemple pour remonter de l'eau d'une nappe phréatique ou des hydrocarbures de formation au fond d'un puits, l'arbre du moteur est couplé à une pompe et l'ensemble moteur plus pompe est immergé dans le fluide à pomper.

Dans ce cas l'espace entre le rotor et le stator est rempli de liquide, ce qui accentue encore les problèmes d'isolement électrique évoqués précédemment.

Une autre solution connue consiste à séparer le moteur de la pompe mais nécessite l'utilisation d'un dispositif d'étanchéité dynamique monté sur l'arbre du moteur. De tels dispositifs d'étanchéité sont délicats et peu fiables. Ils sont mal adaptés à un service de longue durée exigé pour des installations dont l'accès est difficile, coûteux, voire dangereux.

Le document EP-A-0 604 762 décrit un moteur électrique synchrone à courant alternatif utilisable, en particulier, pour l'entraînement de pompes submersibles. Ce moteur comporte un circuit magnétique statorique comprenant une première partie, sur laquelle sont montés des enroulements électriques, et une deuxième partie présentant une zone cylindrique évidée, à l'intérieur de laquelle est disposé un rotor cylindrique muni d'un axe de rotation supporté par au moins deux paliers. Le circuit magnétique statorique et les enroulements électriques sont enfermés hermétiquement dans une chambre statorique à paroi en un matériau diélectrique et sont noyés dans une résine isolante remplissant cette chambre. La paroi de la chambre statorique présente une partie en creux, qui épouse la tonne de la zone évidée de la deuxième partie du circuit statorique et délimite ainsi un logement borgne cylindrique, externe à la chambre statorique, dans lequel est inséré le rotor du moteur, ledit rotor ainsi que son axe de rotation et les paliers supports se trouvant à l'extérieur de la chambre statorique.

### EXPOSE DE L'INVENTION

La présente invention a pour objet de remédier aux inconvénients mentionnés plus haut et notamment de fournir un moteur électrique à courant alternatif dont les enroulements peuvent supporter une forte tension électrique et sont faciles à réaliser grâce aux grandes distances qui séparent les enroulements entre eux et les enroulements du circuit magnétique statorique.

Ce moteur électrique est particulièrement adapté pour réaliser un groupe électropompe immergé.

A cette fin, la présente invention propose un moteur électrique à courant alternatif comportant un circuit magnétique statorique, qui comprend une première partie sur laquelle sont montés des enroulements électriques et une deuxième partie évidée, un rotor cylindrique muni d'un axe de rotation supporté par au moins deux paliers, ledit rotor étant disposé à l'intérieur de la partie évidée du circuit statorique, et une chambre statorique à paroi étanche, dont au moins une partie est réalisée en un matériau isolant, à l'intérieur de laquelle sont montés la première partie du circuit statorique et les enroulements électriques et à l'extérieur de laquelle se trouvent le rotor cylindrique, son axe de rotation et les paliers supports, lequel moteur est caractérisé en ce que la deuxième partie du circuit statorique se trouve à l'extérieur de la chambre statorique et en ce que cette deuxième partie du circuit statorique, le rotor cylindrique avec son axe de rotation et les paliers supports sont disposés de telle sorte à l'extérieur de la chambre statorique que le circuit magnétique statorique traverse la paroi de ladite chambre dans la partie de cette paroi réalisée en matériau isolant, lequel matériau est un isolant amagnétique.

Selon une autre caractéristique du moteur de l'invention, l'axe du rotor dudit moteur étant relié mécaniquement à l'axe du rotor d'une pompe, la deuxième partie du circuit magnétique statorique, le rotor dudit moteur, les paliers supports et le rotor de la pompe sont enfermés dans une chambre rotorique à paroi étanche munie d'une entrée et d'une sortie d'un fluide à pomper.

Selon une autre caractéristique du moteur de l'invention, la paroi étanche de la chambre statorique comporte un dispositif de compensation de la différence de pression entre l'intérieur et l'extérieur de ladite chambre.

Selon une autre caractéristique du moteur de l'invention, les enroulements électriques statoriques comportent au moins une prise de soutirage d'énergie électrique.

Selon une autre caractéristique du moteur de l'invention, le circuit magnétique statorique comporte un enroulement électrique supplémentaire pour soutirer de l'énergie électrique.

Selon une autre caractéristique le moteur de l'invention, comporte en plus un piquage d'entrée et un piquage de sortie montés sur la paroi de la chambre statorique pour raccorder un dispositif extérieur de refroidissement d'un fluide remplissant la chambre statorique.

Selon une dernière caractéristique, le moteur de l'invention comporte en plus une chemise réalisée en matériau isolant amagnétique qui enveloppe la première partie du circuit magnétique statorique, raccordée de manière étanche à la partie réalisée en matériau isolant amagnétique de la paroi de la chambre pour rendre ladite chambre étanche.

### BREVE DESCRIPTION DES DESSINS

D'autres avantages de l'invention apparaîtront à la lecture de la description qui suit. donnée à titre d'exemple et en référence aux dessins annexés dans lesquels :
la figure 1 est une vue en coupe longitudinale, d'un moteur électrique selon un premier mode de réalisation l'invention,
- la figure 2 est une vue de côté, d'une partie d'un moteur électrique selon le premier mode de réalisation de l'invention,
- la figure 3 est une vue en perspective, d'une partie d'un moteur électrique selon le premier mode de réalisation de l'invention,
- la figure 4 est une vue en coupe longitudinale, d'un moteur électrique selon un deuxième mode de réalisation l'invention,
- la figure 5 est une vue en coupe longitudinale, d'un moteur électrique selon un troisième mode de réalisation l'invention,

### EXPOSE DETAILLE DE L'INVENTION

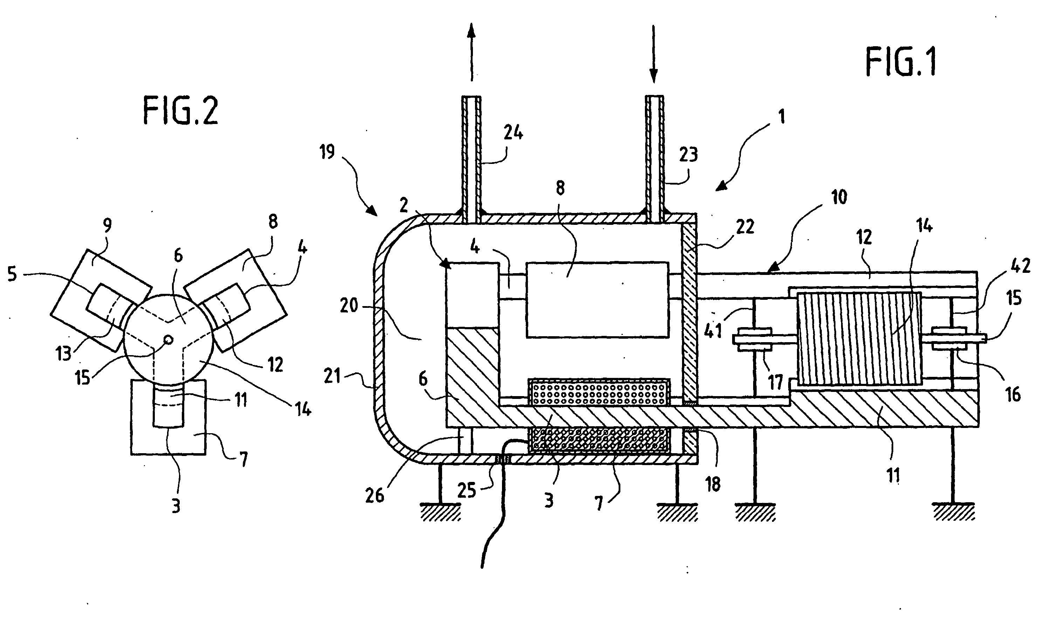

La figure 1 représente une vue en coupe longitudinale d'un premier mode de réalisation du moteur 1 de l'invention qui comporte un circuit magnétique statorique feuilleté qui comprend :
- une première partie 2 constituée de trois tronçons de noyaux 3, 4 et 5, dont seulement les tronçons 3 et 4 sont visibles sur la figure 1, décalés dans l'espace de 120° et formant à une de leur extrémité une culasse 6.
- une deuxième partie 10, constituée de trois tronçons de noyaux 11, 12 et 13 qui prolongent les trois tronçons 3, 4 et 5, dont seulement 11 et 12 sont visibles sur la figure 1 et dont les extrémités forment un évidement cylindrique.

Sur chacun des tronçons de noyaux 3, 4 et 5 sont montés des enroulements 7, 8 et 9 électriques dont seulement 7 et 8 sont visibles sur la figure 1.

Les trois tronçons 3, 4 et 5 du circuit magnétique statorique et les enroulements électriques qu'ils supportent sont placés dans une carcasse 19 cylindrique fixe, fermée de manière étanche à une extrémité par un fond 21 et à l'extrémité opposée par une plaque 22 d'obturation.

Cette plaque 22 est réalisée en matériau isolant et amagnétique pour ne pas constituer une spire en court circuit autour du circuit magnétique statorique, ni un shunt magnétique du même circuit.

La carcasse 19 et la plaque 22 forment une chambre 20 statorique étanche. La carcasse 19 comporte une traversée de câble étanche pour le passage d'un câble d'alimentation des enroulements statoriques. La plaque 22 comporte des traversées 18 étanches pour le passage respectivement des trois noyaux du circuit magnétique statorique constitués par les tronçon 3, 4, 5, 11, 12 et 13.

Les tôles qui constituent les noyaux du circuit statorique sont assemblées de manière étanche au niveau de leur passage au travers de la plaque 22, par exemple au moyen d'une mince couche de matière souple isolante disposée entre deux tôles voisines.

La culasse 6 du circuit magnétique statorique 2 est soutenue par le support 26.

La carcasse 19 est aussi munie d'un piquage d'entrée 23 et d'un piquage de sortie 24 pour le raccordement d'un dispositif extérieur de refroidissement d'un fluide isolant remplissant la chambre statorique 20, non représenté sur la figure 1.

Dans l'évidement situé à l'extrémité de la deuxième partie 10 du circuit magnétique statorique 2 est monté un rotor feuilleté 14 qui comporte un arbre15 de rotation qui repose sur les paliers fixes 16 et 17 reliés mécaniquement par des pièces 41 et 42 de calage à la deuxième partie 10 du circuit statorique de manière à assurer le centrage du rotor et du stator. Les pièces de calage 41et 42 sont réalisées en matériau isolant et amagnétique de manière à ne pas former une spire en court circuit autour des tronçons de noyaux statoriques et à ne pas court-circuiter magnétiquement le circuit magnétique statorique.

La figure 2 représente une vue partielle de côté du moteur qui montre les positions relatives du circuit magnétique statorique comprenant les tronçons de noyaux 3, 4, 5 reliés par la culasse 6, les tronçons de noyaux 11, 12 et 13, les enroulements 7, 8, 9 montés sur les tronçons de noyaux 3, 4, 5, et le rotor 14 avec son axe 15.

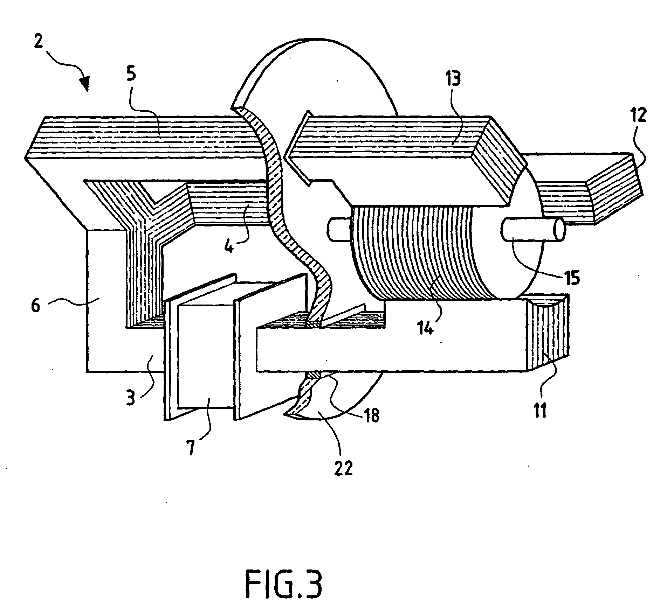

La figure 3 représente une vue partielle en perspective du moteur sur laquelle apparaissent le circuit magnétique statorique 2 comprenant les tronçons de noyaux 3, 4, 5 reliés par la culasse 6, les tronçons de noyaux 11, 12 et 13, le rotor 14 avec son axe 15, l'enroulement 7 électrique monté sur le tronçon de noyau 3 et la plaque 22 munie d'une traversée étanche 18 pour le passage du tronçon 11.

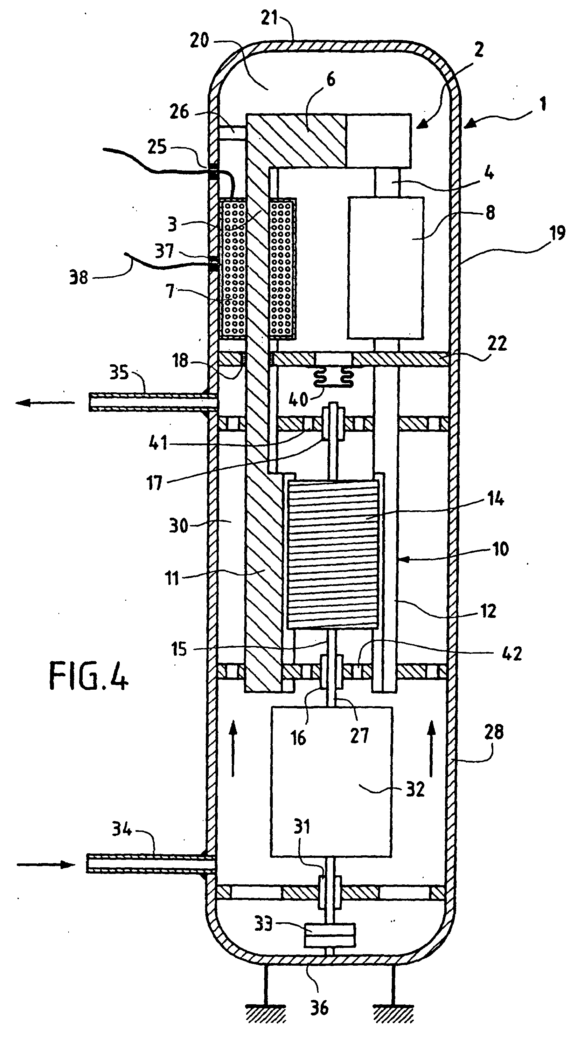

Selon un deuxième mode de réalisation représenté schématiquement en coupe longitudinale sur la figure 4, le moteur 1 de l'invention est à axe vertical et comporte un circuit magnétique statorique 2, des enroulements électriques 7, 8, une carcasse 19, une plaque 22 et un rotor 14 tels que décrits pour le premier mode de réalisation et agencés de la même manière.

Selon ce deuxième mode de réalisation le moteur 1 comporte en plus :
- un impulseur de pompe 32 muni d'un arbre 27 relié à l'extrémité de l'arbre 15 du rotor 14 et muni à son extrémité inférieure d'une butée axiale 33,
- un soufflet 40 de compensation de la différence de pression entre les deux faces de la plaque 22,
- un prolongement 28 de la carcasse 19 muni d'un fond 36, qui forme une chambre rotorique 30 qui enferme la deuxième partie 10 du circuit magnétique statorique, le rotor 14 et l'impulseur 32 de la pompe,
- une prise électrique 38 de soutirage d'énergie électrique qui passe au travers de la carcasse 21 par une traversée de câble étanche 37.

Les arbres 15 et 27 sont supportés par des paliers 16, 17 et 31, les paliers 16 et 17 étant reliés mécaniquement au circuit magnétique statorique au moyen de pièces de calage 41 et 42 comme dans le premier mode de réalisation, le palier 31 et la butée 33 étant solidaires du prolongement 28 de la carcasse 19.

Le prolongement 28 de la carcasse 19 comporte une entrée 34 et une sortie 35 du liquide mis en circulation par l'impulseur 32 entraîné par le rotor 14 du moteur.

Pour faire fonctionner le moteur selon ce deuxième mode de réalisation, immergé dans un liquide par très grande profondeur, c'est à dire sous une pression statique très élevée, la chambre 20 statorique est remplie d'un liquide.

Grâce au soufflet 40 les pressions entre la chambre statorique 20 et la chambre rotorique 30 s'équilibrent et ainsi les problèmes liés à la différence de pression entre ces deux chambres disparaissent.

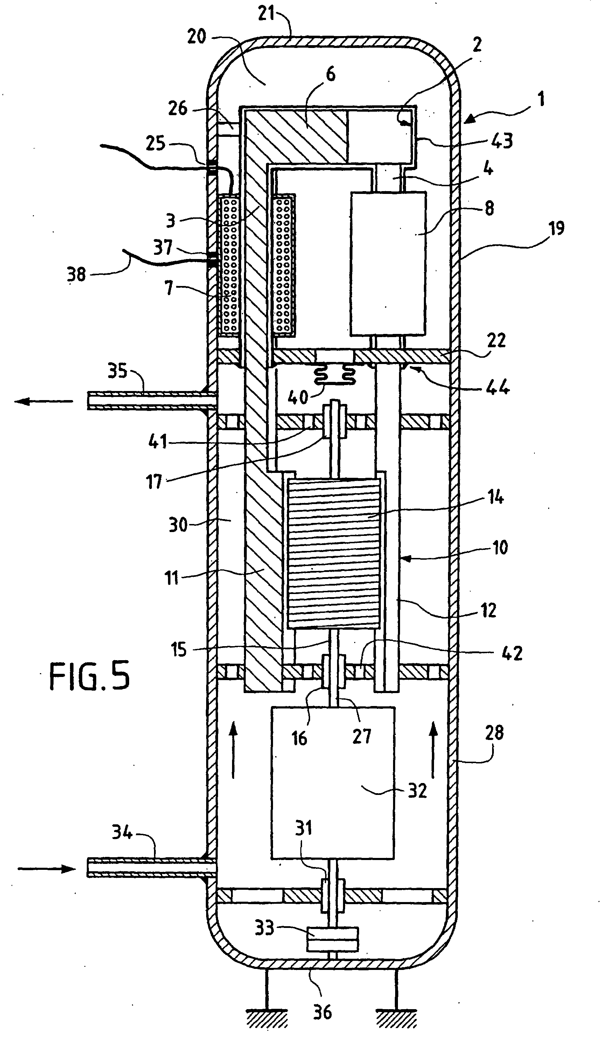

Selon un troisième mode de réalisation représenté schématiquement en coupe longitudinale sur la figure 5, le moteur 1 de l'invention est à axe vertical et comporte un circuit magnétique statorique 2, des enroulements électriques 7, 8, une carcasse 19, une plaque 22 et un rotor 14 tels que décrits pour le premier mode de réalisation et agencés de la même manière.

Selon ce troisième mode de réalisation les traversées étanches référencées 18 sur la figure 1 sont remplacées par une chemise référencée 43 sur la figure 5.

Cette chemise 43, réalisée en matériau isolant et amagnétique, enveloppe la première partie 2 du circuit magnétique statorique et est raccordée de manière étanche par une soudure 44 à la partie 22 de la paroi de la chambre 20 statorique.

Grâce à cette chemise l'étanchéité de la chambre 20 statorique est assurée et le circuit magnétique statorique se trouve dans les conditions de pression de la chambre 30 rotorique ce qui supprime le problème de l'étanchéité de la traversée de la partie 22 de la paroi de la chambre 30 rotorique par les tôles du circuit magnétique statorique et notamment l'étanchéité entre les tôles qui peut être difficile à réaliser.

Grâce à la forme des enroulements statoriques et à leur montage sur les tronçons de noyaux magnétiques leur isolement électrique n'est pas limité par la taille des encoches comme dans les moteurs conventionnels, et de ce fait il peuvent être alimentés par des tensions largement supérieures à celles des moteurs conventionnels ce qui évite l'utilisation d'un transformateur à proximité du moteur lorsque celui-ci est très éloigné de sa source d'alimentation électrique.

Le moteur électrique de l'invention présente aussi l'avantage de ne comporter que des dispositifs d'étanchéité statiques qui ne présentent pas les inconvénients des dispositifs d'étanchéité dynamique, ce qui lui confère une grande fiabilité, indispensable pour de nombreuses applications dans lesquelles le moteur est difficilement accessible, par exemple au fond d'un puits de production de pétrole sous-marin ou dans une zone dangereuse comme c'est le cas dans l'industrie nucléaire et certaines industries chimiques de fabrication de produits dangereux.

Les enroulements électriques montés dans la chambre 20 étanche sont complètement isolés du milieu environnant et du fluide pompé ce qui les rend insensibles aux agressions mécaniques et chimiques liés à la nature des fluides pompés et du milieu environnant.

Le moteur de l'invention est particulièrement adapté au pompage des hydrocarbures sous forme polyphasique au fond des puits de production sous-marins par très grande profondeur.

## Revendications

1. Moteur électrique à courant alternatif comportant un circuit magnétique statorique, qui comprend une première partie (2) sur laquelle sont montés des enroulements (7, 8) électriques et une deuxième partie (10) évidée, un rotor (14) cylindrique muni d'un axe de rotation (15) supporté par au moins deux paliers (16 et 17), ledit rotor étant disposé à l'intérieur de la partie évidée du circuit statorique, et une chambre statorique (20) à paroi étanche, dont au moins une partie est réalisée en un matériau isolant, à l'intérieur de laquelle sont montés la première partie (2) du circuit statorique et les enroulements (7, 8) électriques et à l'extérieur de laquelle se trouvent le rotor (14) cylindrique, son axe de rotation (15) et les paliers supports (16 et 17), lequel moteur est **caractérisé en ce que** la deuxième partie (10) du circuit statorique se trouve à l'extérieur de la chambre statorique (20) et **en ce que** cette deuxième partie (10) du circuit statorique, le rotor (14) cylindrique avec son axe de rotation (15) et les paliers supports (16 et 17) sont disposés de telle sorte à l'extérieur de la chambre statorique (20) que le circuit magnétique statorique traverse la paroi de ladite chambre dans la partie de cette paroi réalisée en matériau isolant, lequel matériau est un isolant amagnétique.

2. Moteur selon la revendication 1, **caractérisé en ce que** l'axe (15) du rotor (14) dudit moteur étant relié mécaniquement à l'axe (27) du rotor (32) d'une pompe, la deuxième partie (10) du circuit magnétique statorique, le rotor (14) dudit moteur, les paliers (16 et 17) supports et le rotor (32) de la pompe sont enfermés dans une chambre rotorique (30) à paroi étanche munie d'une entrée (34) et d'une sortie (35) d'un fluide à pomper.

3. Moteur selon l'une des revendications 1 ou 2 **caractérisé en ce que** la paroi étanche de la chambre statorique (20) comporte un dispositif (40) de compensation de la différence de pression entre l'intérieur et l'extérieur de ladite chambre

4. Moteur selon l'une des revendications 1 à 3 **caractérisé en ce que** les enroulements (7, 8) électriques statoriques comportent au moins une prise (38) de soutirage d'énergie électrique.

5. Moteur selon l'une des revendications 1 à 3 **caractérisé en ce que** le circuit magnétique statorique comporte un enroulement électrique supplémentaire pour soutirer ce l'énergie électrique.

6. Moteur selon l'une des revendications 1 à 5 **caractérisé en ce qu'**il comporte en plus un piquage (23) d'entrée et un piquage (24) de sortie montés sur la paroi de la chamore statorique (20) pour raccorder un dispositif extérieur de refroidissement d'un fluide remplissant la chambre statorique (20).

7. Moteur selon l'une des revendications 1 à 6, **caractérisé en ce qu'**il comporte en plus une chemise (43) réalisée en matériau isolant amagnétique qui enveloppe la première partie (2) du circuit magnétique statorique, raccordée de manière étanche à la partie (22) réalisée en matériau isolant amagnétique de la paroi de la chambre (20) pour rendre ladite chambre étanche.

8. Moteur selon l'une des revendications 1 à 7, **caractérisé en ce que** les paliers (16 et 17), qui supportent l'axe de rotation (15) du rotor (14), sont reliés mécaniquement à la deuxième partie (10) du circuit magnétique, statoriquc par des pièces de calage (41 et 42) en un matériau isolant et amagnétique.

## Patentansprüche

1. Wechselstrommotor, welcher einen Magnetkreis des Ständers aufweist, der einen ersten Abschnitt (2) umfasst, auf welchem elektrische Wicklungen (7, 8) angebracht sind, und einen vertieften zweiten Abschnitt (10), sowie einen zylinderförmigen Läufer (14) mit einer Drehachse (15), die sich über mindestens zwei Lager (16 und 17) abstützt, wobei der Läufer im Inneren des vertieften Abschnitts des Ständerkreises angeordnet ist, und eine Ständerkammer (20) mit dichter Wandung, bei der mindestens ein Teil aus einem Isoliermaterial ausgebildet ist, in welcher der erste Abschnitt (2) des Ständerkreises und die elektrischen Wicklungen (7, 8) angeordnet sind, während sich außerhalb derselben der zylinderförmige Läufer (14), dessen Drehachse (15) und die Stützlager (16 und 17) befinden,
**dadurch gekennzeichnet, dass** der zweite Abschnitt (10) des Ständerkreises sich außerhalb der Ständerkammer (20) befindet und dass dieser zweite Abschnitt (10) des Ständerkreises, der zylinderförmige Läufer (14) mit seiner Drehachse (15) und die Stützlager (16 und 17) außerhalb der Ständerkammer (20) in der Weise angeordnet sind, dass der Magnetkreis des Ständers durch die Wandung der Kammer in dem Teil dieser Wandung hindurchgeführt ist, der aus Isoliermaterial gebildet ist, wobei es sich bei diesem Material um ein nichtmagnetisches Isoliermaterial handelt.

2. Motor nach Anspruch 1, **dadurch gekennzeichnet, dass** die Achse (15) des Läufers (14) des Motors mechanisch mit der Achse (27) des Läufers (32) einer Pumpe verbunden ist und der zweite Abschnitt (10) des Magnetkreises des Ständers, der Rotor (14) des Motors, die Stützlager (16 und 17) und der Läufer (32) der Pumpe in einer Läuferkammer (30) mit dichter Wandung eingeschlossen sind, welche einen Einlass (34) und einen Auslass (35) für ein zu förderndes Strömungsmittel aufweist.

3. Motor nach einem der Ansprüche 1 oder 2, **dadurch gekennzeichnet, dass** die dichte Wandung der Ständerkammer (20) eine Vorrichtung (40) zum Ausgleichen des Druckunterschieds zwischen dem Innenraum und dem Umfeld der Kammer aufweist.

4. Motor nach einem der Ansprüche 1 bis 3, **dadurch gekennzeichnet, dass** die elektrischen Wicklungen /7, 8) des Ständers mindestens einen Abgriffpunkt (38) zum Abgreifen von elektrischer Energie aufweisen.

5. Motor nach einem der Ansprüche 1 bis 3, **dadurch gekennzeichnet, dass** der Magnetkreis des Ständers eine zusätzliche elektrische Wicklung zum Abgreifen von elektrischer Energie aufweist.

6. Motor nach einem der Ansprüche 1 bis 5, **dadurch gekennzeichnet, dass** er des Weiteren einen Abzweigstutzen (23) für den Einlass und einen Abzweigstutzen (24) für den Auslass aufweist, wobei die Abzweiganschlüsse auf der Wandung der Ständerkammer (20) für den Anschluss einer externen Vorrichtung zum Kühlen eines Strömungsmittels angebracht sind, mit welchem die Ständerkammer (20) gefüllt ist.

7. Motor nach einem der Ansprüche 1 bis 6, **dadurch gekennzeichnet, dass** er des Weiteren eine Ummantelung (43) aufweist, die aus einem nichtmagnetischen Isoliermaterial gefertigt ist und den ersten Abschnitt (2) des Magnetkreises des Ständers umschließt, und unter Abdichtung mit dem Abschnitt (22) der Wandung der Kammer (20) verbunden ist, der aus einem nichtmagnetischen Isoliermaterial besteht, um so die Kammer abzudichten.

8. Motor nach einem der Ansprüche 1 bis 7, **dadurch gekennzeichnet, dass** die Lager (16 und 17), welche die Drehachse (15) des Läufers (14) abstützen, mechanischen mit dem zweiten Abschnitt (10) des Magnetkreises des Ständers über Einstellteile (41 und 42) aus einem nichtmagnetischen Isoliermaterial verbunden sind.

## Claims

1. An alternating-current electric motor including a stator magnetic circuit, which comprises a first part (2) on which electrical windings (7, 8) are mounted and a second, hollow, part (10), a cylindrical rotor (14) equipped with a rotational shaft (15) supported by at least two bearings (16 and 17), the said rotor being arranged inside the hollow part of the stator circuit, and a stator chamber (20) with a leaktight wall, at least a part of which is produced from an insulating material, within which are mounted the first part (2) of the stator circuit and the electrical windings (7, 8), and outside which lie the cylindrical rotor (14), its rotational shaft (15) and the support bearings (16 and 17), which motor is **characterized in that** the second part (10) of the stator circuit lies outside the stator chamber (20) and **in that** this second part (10) of the stator circuit, the cylindrical rotor (14) with its rotational shaft (15) and the support bearings (16 and 17) are arranged in such a way, outside the stator chamber (20), that the stator magnetic circuit passes through the wall of the said chamber in the part of this wall produced from insulating material, which material is a non-magnetic insulant.

2. The motor as claimed in claim 1, **characterized in that**, with the shaft (15) of the rotor (14) of the said motor being linked mechanically to the shaft (27) of the rotor (32) of a pump, the second part (10) of the stator magnetic circuit, the rotor (14) of the said motor, the support bearings (16 and 17) and the rotor (32) of the pump are enclosed in a rotor chamber (30) with a leaktight wall equipped with an inlet (34) and with an outlet (35) for a fluid to be pumped.

3. The motor as claimed in one of claims 1 or 2, **characterized in that** the leaktight wall of the stator chamber (20) includes a device (40) for compensating for the pressure difference between the inside and the outside of the said chamber.

4. The motor as claimed in one of claims 1 to 3, **characterized in that** the stator electrical windings (7, 8) include at least one connection (38) for drawing electrical energy.

5. The motor as claimed in one of claims 1 to 3, **characterized in that** the stator magnetic circuit includes a supplementary electrical winding for drawing electrical energy.

6. The motor as claimed in one of claims 1 to 5, **characterized in that** it further includes an inlet tapping (23) and an outlet tapping (24) which are mounted on the wall of the stator chamber (20) for connecting an external device for cooling a fluid filling the stator chamber (20).

7. The motor as claimed in one of claims 1 to 6, **characterized in that** it further includes a jacket (43) produced from a non-magnetic insulating material which encases the first part (2) of the stator magnetic circuit, connected in leaktight fashion to the part (22) produced from non-magnetic insulating material of the wall of the chamber (20) in order to render the said chamber leaktight.

8. The motor as claimed in one of claims 1 to 7, **characterized in that** the bearings (16 and 17), which support the rotational shaft (15) of the rotor (14), are linked mechanically to the second part (10) of the stator magnetic circuit by fixing pieces (41 and 42) made of a non-magnetic and insulating material.
